# EUROPÄISCHE PATENTSCHRIFT

(11) **EP 0 657 661 B1**
(45) Veröffentlichungstag und Bekanntmachung des Hinweises auf die Patenterteilung: **30.09.1998**
(21) Anmeldenummer: 94118324.6
(22) Anmeldetag: 21.11.1994
(51) Int. Cl.: F16D 65/16

(54) **Zuspannvorrichtung für eine Scheibenbremse**
Actuating device for a disc brake
Dispositif d'actionnement d'un frein à disque

(30) Priorität: 22.11.1993 DE 4339764
(43) Veröffentlichungstag der Anmeldung: 14.06.1995
(73) Patentinhaber: PERROT BREMSEN GmbH, 68229 Mannheim (DE)
(72) Erfinder: Rupprecht, Bernd, D-68535 Edingen-Neckarhausen (DE)
(74) Vertreter: Patentanwälte Leinweber & Zimmermann

(56) Entgegenhaltungen:
- EP-A- 0 291 071
- FR-A- 2 296 128
- FR-A- 2 315 037
- FR-A- 2 331 717

## Beschreibung

Die Erfindung betrifft eine Zuspannvorrichtung für eine Gleitsattelscheibenbremse, mit einem Gleitsattel, mindestens einer Bremswelle, mindestens einem an der Bremswelle angreifenden Schwenkhebel und mindestens einem an dem Schwenkhebel angreifenden Betätigungselement zum verschwenken des Schwenkhebels, wobei die Bremswelle eine Kontur hat, bei der sich die lichte Weite zwischen einer bremsscheibenabgewandten Abstützung und einer auf die Bremsscheibe einwirkenden Bremsbacke bei Verschwenken des Schwenkhebels verändert.

Die Zuspannvorrichtung der eingangs genannten Art ist bekannt. Dabei ist die innere mechanische Übersetzung i der Bremse, die sich aus dem Verhältnis zwischen der Länge des Schwenkhebels um die Drehachse der Bremswelle und den Versatz der Kontur der Bremswelle gegenüber der genannten Drehachse ergibt, entscheidend für die entsprechend dem Einsatz der Bremse aufzubringende Zuspannkraft. Werden unterschiedliche Belagzuspannkräfte benötigt, muß das Übersetzungsverhältnis geändert werden.

Aus der oben beschriebenen Abhängigkeit der inneren mechanischen Übersetzung i der Bremse und damit der Zuspannkraft zum einen von der Länge des Schwenkhebels und zum anderen von dem Versatz der Bremswellenkontur ergibt sich, daß zur Veränderung der Zuspannkraft entweder die Länge des Schwenkhebels oder der Versatz der Kontur verändert werden muß. Beides ist jedoch sehr aufwendig. Es bedeutet nämlich, daß entweder der ScHwenkhebel oder die Bremswelle ausgetauscht werden muß. Ein Austausch der Bremswelle macht u.U. eine Anpassung der Bremswellenlagerung und/oder -Abstützung erforderlich, um die veränderte Bremswelle darin anordnen zu können.

Der Erfindung liegt die Aufgabe zugrunde, die für das Betätigen der Bremse erforderliche Zuspannkraft zu verändern, ohne Teile austauschen zu müssen.

Erfindungsgemäß wird die gestellte Aufgabe dadurch gelöst, daß die Lage des Angriffspunkts des Betätigungselements an dem Schwenkhebel längs dem Schwenkhebel veränderbar ist und eine Ansteuereinrichtung für das Betätigungselement vorgesehen ist, die an einem Flansch an dem Gleitsattel mit quer zu einer Bewegungsrichtung des Betätigungselements liegender Flanschebene befestigt ist und deren Lage entsprechend der Lage des Angriffspunkts in der Flanschebene veränderlich ist.

Aus der FR-A-2,296,128 ist eine Zuspannvorrichtung für Trommelbremsen bekannt, bei der der Angriffspunkt des Betätigungselements an dem Schwenkhebel veränderbar ist. Ein als Ansteuereinrichtung dienender Bremszylinder ist dabei an einem an einem Achskörper angebrachten Flansch befestigt. Die Flanschebene erstreckt sich dabei parallel zu der Bewegungsrichtung einer von dem Bremszylinder betätigten Kolbenstange. Die Lage des Bremszylinders ist in der Flanschebene veränderlich.

Die Erfindung geht von der Erkenntnis aus, daß der Abstand des Angriffspunktes des Betätigungselements an dem Schwenkhebel von der Achse der Bremswelle für den wirksamen Hebelarm und damit für die von der inneren mechanischen Übersetzung i abhängende Zuspannkraft entscheidend ist, so daß eine Verschiebung des Angriffspunkts zu der gewünschten Veränderung der Zuspannkraft führt. Ein Austausch von Teilen ist damit nicht mehr erforderlich.

Dadurch daß die Ansteuereinrichtung an einem Flansch befestigt und ihre Lage in der Flanschebene veränderlich ist, wobei die Flanschebene quer zu einer Bewegungsrichtung des Betätigungselements liegt, bleibt die Richtung der von der Betätigungseinrichtung auf dem Schwenkhebel ausgeübte Kraft unabhängig von der Lage der Betätigungseinrichtung erhalten.

Das Betätigungselement kann sich durch eine Öffnung in dem Gleitsattel erstrecken. Es kann aber auch vorgesehen sein, daß sich der Schwenkhebel durch die genannte Öffnung in dem Gleitsattel erstreckt.

Bevorzugt ist eine Abdichtung an der Öffnung vorgesehen.

Schließlich ist es erfindungsgemäß besonders bevorzugt, daß alle einstellbaren Angriffspunkte auf einer Geraden liegen.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: eine Schnittansicht eines ersten Ausführungsbeispiels der erfindungsgemäßen Zuspannvorrichtung,
- Fig. 2: eine quer zur Schnittebene von Fig. 1 gesehene Teilansicht,
- Fig. 3: eine Schnittansicht einer zweiten Ausführungsform der erfindungsgemäßen Zuspannvorrichtung.

In der Zeichnung ist eine Gleitsattelscheibenbremse für Fahrzeuge, insbesondere für Straßenfahrzeuge, mit einem Bremssattel 1 gezeigt, der mindestens auf einer Seite einer Bremsscheibe 2 eine Zuspannvorrichtung 3 mit einer um eine Drehachse 4 drehbaren Bremswelle 5 aufweist. Zum Betätigen der Bremswelle 5 dient ein Schwenkhebel 6, der radial zu der zu der Achse 7 der Bremsscheibe 2 rechtwinklig verlaufenden Drehachse 4 der Bremswelle 5 liegt. Die Bremswelle 5 stützt sich bremsscheibenabgewandt beidseits des Schwenkhebels 6 an zylindrischen Ansätzen 8 in koaxial dazu ausgebildeten innenzylindrischen Flächen 9 des Bremssattels 1 ab. Bremsscheibenzugewandt und den zylindrischen Ansätzen 8 gegenüberliegend ist eine Nockenkontur 10 an der Bremswelle ausgebildet. Bei Drehung der Bremswelle 5 erfolgt eine axiale Wegzunahme in Richtung der Bremsscheibe 2, die eine Verschiebung einer im Bremssattel 1 gelagerten Bremsbacke 11 gegen die Bremsscheibe 2 bewirkt. Zwischen der Nockenkontur 10 und der Bremsbacke 11 liegt ein Druckstück 12.

Es wird ausdrücklich darauf hingewiesen, daß die in der Zeichnung dargestellte Kontur der Bremswelle 5 nur ein Beispiel für viele mögliche Ausgestaltungen darstellt. Auch ist es nicht erforderlich, das Druckstück 12 vorzusehen.

An dem Bremssattel 1 ist ein Bremszylinder 13 direkt angeflanscht. Er kann jedoch auch indirekt durch Verlängerungsteile mit dem Bremssattel 1 gekoppelt sein. Eine mittels des Bremszylinders 13 betätigbare Kolbenstange 14 greift an dem Schwenkhebel 6 an. Bei Betätigung des Bremszylinders 13 drückt die Kolbenstange 14 gegen den Schwenkhebel 6 und bewirkt eine entsprechende Drehung der Bremswelle 5. Daraus resultiert eine Axialverschiebung von gegen die Nockenkontur 10 abgestützten Teilen in Richtung der Bremsscheibe 2.

Die innere mechanische Übersetzung i der Bremse, die sich aus dem Verhältnis zwischen der Länge L des Schwenkhebels 6 um die Drehachse 4 der Bremswelle 5 und einem Versatz V der Nockenkontur 10 gegenüber der Drehachse 4 ergibt, bestimmt die Zuspannkraft Fz der Bremse.

Der wirksame Teil der Länge L des Schwenkhebels 6 ist daher durch Veränderung des Angriffspunktes der Kolbenstange 14 an dem Schwenkhebel 6 veränderlich. In der Zeichnung sind verschiedene Angriffspunkte LA und LX eingezeichnet. Sie liegen jeweils auf einer Geraden.

In den Zeichnungen sind jeweils nur drei verschiedene Angriffspunkte dargestellt. Selbstverständlich können es auch nur zwei oder mehr als 3 Angriffspunkte sein. Bei dichter Staffelung der Angriffspunkte ist eine quasi stufenlose Einstellung der Zuspannkraft Fz möglich.

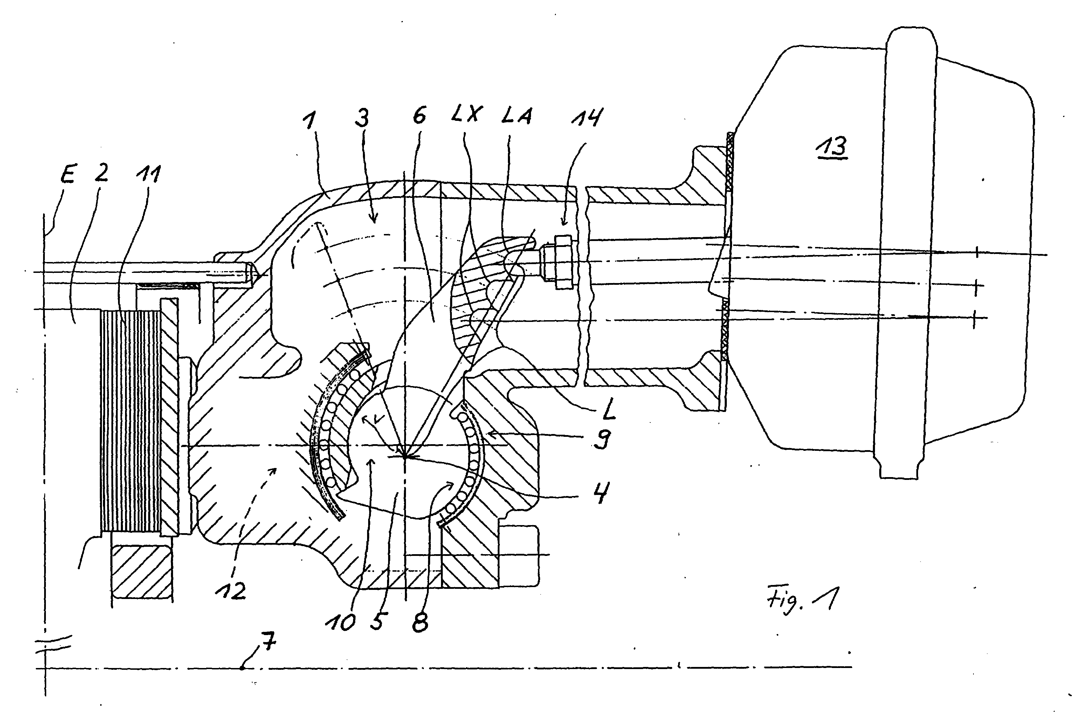

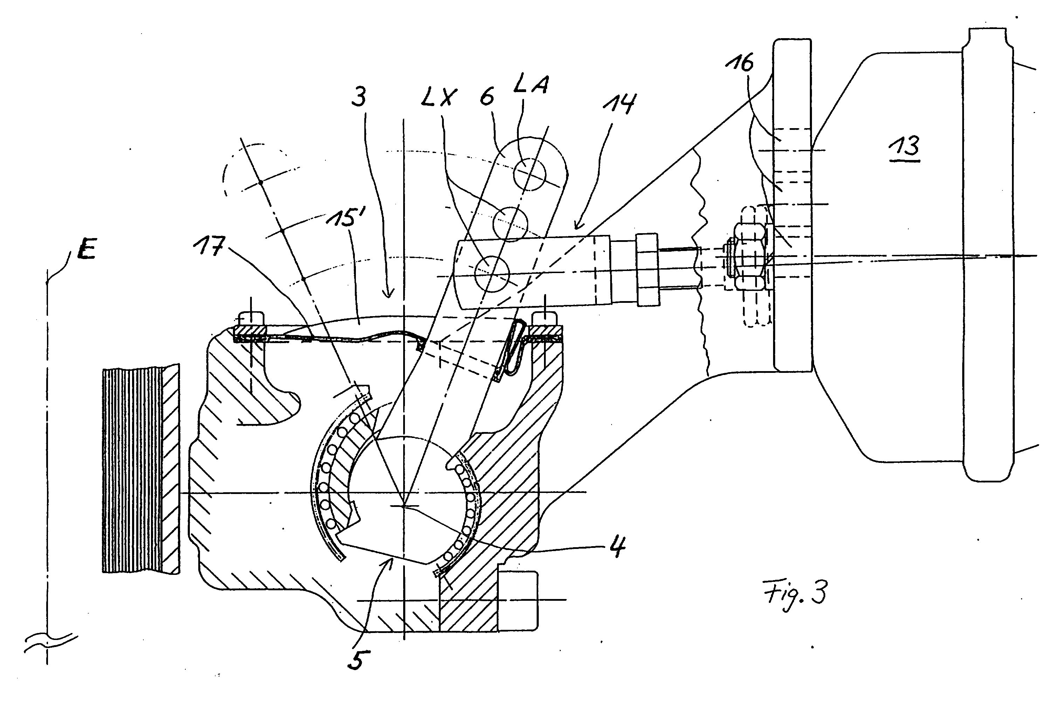

Die Art des Angriffs der Kolbenstange 14 an dem Schwenkhebel 6 ist nach Fig. 1 in Form eines an seinem Ende abgerundeten Stiftes verwirklicht, der in eine entsprechend geformte Ausnehmung in dem Schwenkhebel 6 eingreift. Nach Fig. 3 ist ein Gelenk vorgesehen. Selbstverständlich sind verschiedenste andere Ausgestaltungen denkbar.

Um den jeweils erforderlichen Versatz der Kolbenstange 14 entsprechend dem jeweils gewählten Angriffspunkt LA bzw. LX zu realisieren, ist der Bremszylinder 13 entsprechend versetzbar mit dem Bremssattel 1 gekoppelt.

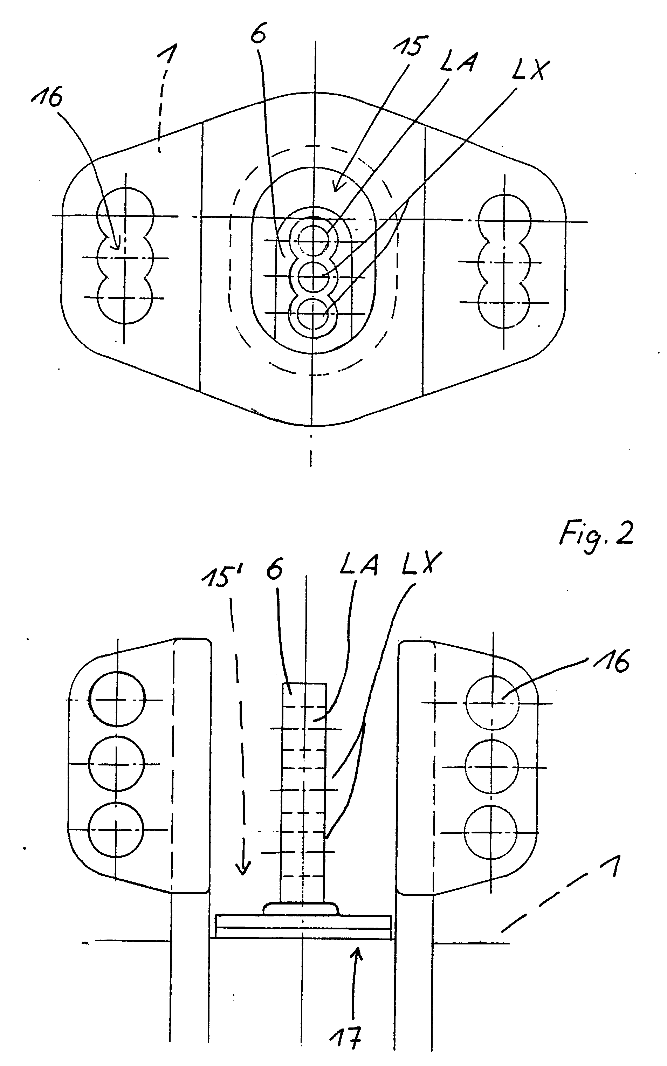

Bei der Ausführungsform nach den Fig. 1 und 2 ist dazu im Bremssattel 1 eine Öffnung 15 mit einer Größe vorgesehen, die ein anschlagfreies Durchführen der Kolbenstange 14 für jeden der Angriffspunkte LA bis LX zuläßt. Ferner sind gemäß Fig. 2 am Bremssattel 1 mehrere Befestigungspunkte 16 zum variablen Anbringen des Bremszylinders 13 vorgesehen. Die in den Fig. 1 und 2 gezeigte Lösung ist besonders vorteilhaft, weil das gesamte Zuspannsystem von dem Bremssattel 1 umschlossen und damit geschützt ist.

Bei der Lösung nach Fig. 3 erstreckt sich der Schwenkhebel 6 mit seinen Angriffspunkten LA bis LX durch eine eine Schwenkbewegung zulassende Öffnung 15' in dem Bremssattel 1. In diesem Fall ist eine elastische und eine Schwenkbewegung ermöglichende Abdichtung 17 zwischen dem Bremssattel 1 und dem Schwenkhebel 6 vorgesehen.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Bremssattel
- 2: Bremsscheibe
- 3: Zuspannvorrichtung
- 4: Drehachse
- 5: Bremswelle
- 6: Schwenkhebel
- 7: Achse
- 8: Ansatz
- 9: innenzylindrische Fläche
- 10: Nockenkontur
- 11: Bremsbacke
- 12: Druckstück
- 13: Bremszylinder
- 14: Kolbenstange
- 15: Öffnung
- 15': Öffnung
- 16: Befestigungspunkt
- 17: Abdichtung
- L: Länge des Schwenkhebels 6
- LA: Angriffspunkt
- LX: Angriffspunkt
- V: Versatz

## Patentansprüche

1. Zuspannvorrichtung für eine Gleitsattelscheibenbremse, mit einem Gleitsattel (1), mindestens einer Bremswelle (5), mindestens einem an der Bremswelle (5) angreifenden Schwenkhebel (6) und mindestens einem an dem Schwenkhebel (6) angreifenden Betätigungselement (14) zum Verschwenken des Schwenkhebels (6), wobei die Bremswelle (5) eine Kontur hat, bei der sich die lichte Weite zwischen einer bremsscheibenabgewandten Abstützung (9) und einer auf die Bremsscheibe (2) einwirkenden Bremsbacke (11) bei Verschwenken des Schwenkhebels (6) verändert, wobei
die Lage des Angriffspunkts (LA, LX) des Betätigungselements (14) an dem Schwenkhebel (6) längs dem Schwenkhebel (6) veränderbar ist und
eine Ansteuereinrichtung (13) für das Betätigungselement (14) vorgesehen ist, die an einem Flansch an dem Gleitsattel (1) mit quer zu einer Bewegungsrichtung des Betätigungselements (14) liegender Flanschebene befestigt ist und deren Lage entsprechend der Lage des Angriffspunkts (LA, LX) in der Flanschebene veränderlich ist.

2. Zuspannvorrichtung nach Anspruch 1, gekennzeichnet durch eine Öffnung (15) in dem Gleisattel (1), wobei der Flansch an der Öffnung (15) angeordnet ist und das Betätigungselement (14) sich durch die Öffnung (15) erstreckt.

3. Zuspannvorrichtung nach Anspruch 1, gekennzeichnet durch eine Öffnung (15') in dem Gleitsattel (1), wobei der Schwenkhebel (6) sich durch die Öffnung (15') erstreckt.

4. Zuspannvorrichtung nach Anspruch 2 oder 3, gekennzeichnet durch eine Abdichtung (17) an der Öffnung (15, 15').

5. Zuspannvorrichtung nach einem der vorangehenden Ansprüche, dadurch gekennzeichnet, daß alle einstellbaren Angriffspunkte (LA, LX) auf einer Geraden liegen.

## Claims

1. Clamping unit for a floating caliper disc brake, with one floating caliper (1), a minimum of one brake shaft (5), a minimum of one rotating lever (6) engaging the brake shaft (5) and a minimum of one actuating element (14) to rotate the brake lever (6), whereby the brake shaft (5) utilises a contoured groove on which the air gap with, between the abutment (9) on the opposite side of the brake disc and the brake pad (2), changes upon rotation of the brake lever (6), whereby
the position of the engagement point (LA, LX) for the actuating element (14) of the brake lever (6) is variable and
a control mechanism (13) for the actuating element (14), mounted to the caliper (1) on a flanged surface transverse to the actuation direction of the actuating element (14), the position of which is variable on the flanged surface according to the position (LA, LX) of the engagement point.

2. Clamping unit according to claim 1, characterised by an opening (15) in the caliper (1), whereby the flange is positioned on the opening (15) and the actuating element (14) protrudes through the opening (15).

3. Clamping unit according to claim 1, characterised by an opening (15') in the caliper (1), whereby the brake lever (6) protrudes through the opening (15').

4. Clamping unit according to claims 1 or 2, characterised by a sealing element (17) on the opening (15, 15').

5. Clamping unit according to one of the aforementioned claims, characterised by all adjustable engagement points (LA, LX) being positioned on a straight plane.

## Revendications

1. Dispositif d'application d'un frein à disque à étrier coulissant, avec un étrier coulissant (1), au moins un arbre de frein (5), au moins un levier pivotant (6) s'appliquant à l'arbre de frein (5) et au moins un élément d'actionnement s'appliquant au levier pivotant (6) pour le pivotement du levier pivotant (6), où l'arbre de frein (5) a un contour où est modifiée la largeur intérieure entre un support (9) éloigné du disque de frein et un segment de frein (11) agissant sur le disque de frein (2) lors d'un pivotement du levier de pivotement (6), où
la position du point d'attaque (LA, LX) de l'élément d'actionnement (14) au levier de pivotement (6) peut être modifiée le long du levier de pivotement (6) et
un dispositif de commande (13) est prévu pour l'élément d'actionnement (14) qui est fixé à une bride à l'étrier coulissant (1) avec un plan de bride situé transversalement à une direction de déplacement de l'élément d'actionnement (14) et dont la position est modifiable conformément à la position du point d'attaque (LA, LX) dans le plan de bride.

2. Dispositif d'application selon la revendication 1, caractérisé par une ouverture (15) dans l'étrier coulissant (1), la bride étant disposée à l'ouverture (15) et l'élément d'actionnement (14) s'étend à travers l'ouverture (15).

3. Dispositif d'application selon la revendication 1, caractérisé par une ouverture (15') dans l'étrier coulissant (1), le levier pivotant (6) s'étendant à travers l'ouverture (15').

4. Dispositif d'application selon la revendication 2 ou 3, caractérisé par un joint d'étanchéité (17) à l'ouverture (15, 15').

5. Dispositif d'application selon l'une des revendications précédentes, caractérisé en ce que tous les points d'attaque ajustables (LA, LX) se situent sur une ligne droite.
